# FASCICULE DE BREVET EUROPEEN

(11) **EP 0 972 450 B1**
(45) Date de publication et mention de la délivrance du brevet: **25.02.2004**
(21) Numéro de dépôt: 99401740.8
(22) Date de dépôt: 09.07.1999
(51) Int. Cl.: A23B 7/157, A23B 7/154, A23B 7/16, A23B 7/06, A23B 7/158

(54) **Procédé de traitement des fruits et légumes**
Früchte und Gemüse Behandlungsverfahren
Fruit and vegetable treatment process

(30) Priorité: 13.07.1998 FR 9808995
(43) Date de publication de la demande: 19.01.2000
(73) Titulaire: XEDA INTERNATIONAL, 13670 Saint-Andiol (FR)
(72) Inventeur: Sardo, Alberto, 13160 Chateaurenard (FR)
(74) Mandataire: Blot, Philippe Robert Emile

(56) Documents cités:
- EP-A- 0 793 917
- WO-A-92/10940
- WO-A-96/10920
- WO-A-97/01288
- US-A- 4 810 512
- US-A- 5 151 284
- US-A- 5 244 866
- US-A- 5 376 391
- DATABASE WPI Week 9702 Derwent Publications Ltd., London, GB; AN 97-014146 XP002096421 & ES 2 092 448 A (AGRIDESA), 16 novembre 1996 (1996-11-16)
- DATABASE WPI Section Ch, Week 9147 Derwent Publications Ltd., London, GB; Class D13, AN 91-345070 XP002096422 & SU 1 634 224 A (POLTAVA COOPERATIVE), 15 mars 1991 (1991-03-15)
- DATABASE WPI Section Ch, Week 8824 Derwent Publications Ltd., London, GB; Class A82, AN 88-166764 XP002096423 & SU 1 353 398 A (LENGD SOVIET TRADE), 23 novembre 1987 (1987-11-23)

## Description

La présente invention concerne un procédé de traitement des fruits et légumes frais.

Après leur récolte, les fruits et légumes frais sont couramment stockés, pendant une période qui peut être relativement longue, avant d'être mis sur le marché pour une consommation rapide.

Au cours de cette période de stockage, il importe que les fruits et légumes ne perdent pas leurs qualités, notamment d'aspect. Celles-ci peuvent être dégradées, en particulier par la prolifération de champignons à la surface du fruit ou du légume, qui conduit à la détérioration rapide du fruit ou du légume touché, ou par le phénomène d'échaudure de prématurité (ou "scald") qui se traduit par un noircissement de la peau des fruits ou légumes dû à des produits oxydés, s'accumulant dans la couche cireuse de surface, phénomène qui peut gagner la pulpe des fruits. Ces détériorations sont encore plus rapides si le fruit ou le légume présente des micro-blessures constituées par des entailles dans la peau.

De façon à retarder le plus possible la dégradation des fruits et des légumes, il est connu de les traiter, avant stockage, par des agents présentant une activité antifongique ou antioxydante.

D'après FR 2 745 977, on connaît un procédé de traitement des fruits et des légumes comprenant les étapes consistant à :
- porter à une température de 40 à 60°C une composition traitante liquide comprenant, dans un véhicule aqueux, au moins un agent traitant choisi parmi un agent antioxydant de type polyphénol, un composé terpénique et leurs mélanges, et
- mettre les fruits ou légumes dans la composition traitante liquide à ladite température pendant une durée inférieure ou égale à 10 minutes.

Ce procédé présente cependant l'inconvénient d'accélérer la maturation des fruits et légumes et notamment lorsque ceux-ci sont particulièrement sensibles à la chaleur, tels que les pêches, les abricots, les tomates et les poires.

De façon à pallier cet inconvénient, FR 96 03 100 enseigne de refroidir, aussitôt après traitement, les fruits ou légumes qui ont été mis en contact avec la composition traitante chaude, et ce jusqu'à la température de stockage souhaitée qui est généralement comprise entre 0 et 15°C. Cependant, l'efficacité de ce post-refroidissement est limitée puisque fruits et légumes ainsi traités subissent quand même une maturation précoce en cours de stockage. L'invention vise à résoudre ce problème technique et propose, pour ce faire, un procédé de traitement comprenant la mise en oeuvre successive, dans l'ordre indiqué, des étapes consistant à:
- refroidir à coeur les fruits et légumes par douchage avec une composition aqueuse de refroidissement ou par immersion dans une composition aqueuse de refroidissement présentant une température supérieure à 0°C et inférieure à 15°C; et
- soumettre, pendant au plus 10 minutes, lesdits fruits et légumes à un traitement par douchage avec une composition traitante ou par immersion dans une composition traitante, ladite composition traitante étant une composition aqueuse préalablement portée à une température de 40 à 60°C.

La première étape à pour effet de préserver les fruits et légumes d'une maturation accélérée malgré la mise en contact avec la composition traitante chaude. Il est essentiel lors de cette première étape de refroidir la totalité du fruit ou légume traité et pas seulement sa couche externe.

La composition aqueuse utilisée pour le refroidissement des fruits et légumes est essentiellement constituée d'eau mais peut comprendre des additifs variés, tels que de l'hypochlorite de sodium pour l'assainissement de l'eau. Une faible quantité de ces additifs est généralement nécessaire et la teneur en additifs est généralement inférieure à 2% en poids, de préférence inférieure à 1%. Dans le cas de l'hypochlorite de sodium, une quantité correspondant à 20-200 ppm, par exemple 30-100 ppm est suffisante.

La température à laquelle il est souhaitable de refroidir les fruits et légumes lors de la première étape est généralement une température inférieure ou égale à la température conventionnelle de stockage préconisée dans la technique, étant entendu que cette température est supérieure à 0°C.

Le tableau 1 suivant rapporte les températures conventionnelles de stockage de certains fruits et légumes, parmi les plus courants.

**Tableau 1**

| fruit /légume | température de stockage | fruit/légume | température de stockage |
|---|---|---|---|
| Abricots | 0-1°C | Concombre | 7-10°C |
| Oranges | 5-10°C | Oignons | 0°C |
| Bananes | 12-15°C | Pastèques | 2-5°C |
| Cerises | 0-1°C | Haricots verts | 7-10°C |
| Citrons | 12-13°C | Fraises | 0°C |
| Mandarines | 5-6°C | Endives | 0°C |
| Pommes | 0-3°C | Laitue | 0°C |
| Poires | 0-1°C | Aubergines | 10-12°C |
| Pêches | 0°C | Melons | 0-7°C |
| Pamplemousses | 10°C | Poivrons | 7-10°C |
| Prunes | 0-1°C | Petits pois | 0°C |
| Raisins | 0-1°C | Tomates | 0-15°C |
| Ail | 0°C | Persil | 0°C |
| Asperges | 0-3°C | Radis | 0°C |
| Pommes de terre | 4-15°C | Epinards | 0°C |
| Blettes | 0°C | Potiron | 10-13°C |
| Artichauts | 0°C | Courgettes | 0-4°C |
| Carottes | 0°C | | |
| Choux | 0°C | | |

Ainsi, le refroidissement nécessite-t-il l'utilisation d'une composition aqueuse froide présentant une température de 0 à 15°C. L'homme du métier adaptera aisément la température de la composition aqueuse de refroidissement à la température souhaitée à l'issue de la première étape.

Il va de soi que plus la température de la composition aqueuse de refroidissement est basse par rapport à la température de refroidissement souhaitée, plus l'opération de refroidissement sera rapide. Aussi selon un mode de réalisation préféré de l'invention, la composition aqueuse de refroidissement présente une température de 0 à 10°C, mieux encore de 0°C à 5-6°C.

Selon l'invention, le refroidissement du fruit est effectué par la technique d'"hydrocooling", c'est à dire par immersion ou douchage. Cette technique est couramment employée pour le refroidissement des fruits et légumes.

L'hydrocooling par douchage consiste à asperger d'eau froide les fruits et légumes entraînés sur des tapis roulants, l'eau froide étant déversée sur les fruits et légumes en flots continus à partir de réservoirs disposés au-dessus des tapis. En procédant ainsi on évite que l'eau ne ruisselle simplement sur les fruits et légumes. Les flots continus d'eau déversés enveloppent en effet les fruits et légumes en permanence d'un rideau d'eau de refroidissement.

L'hydrocooling par immersion consiste à tremper les fruits et légumes dans un courant d'eau de refroidissement. Cette deuxième technique est légèrement moins efficace dans la mesure où l'on évite difficilement la remontée des fruits et légumes à la surface de l'eau.

Bien que la technique d'hydrocooling soit particulièrement préférée dans le cadre de l'invention, il doit être entendu que toute autre technique équivalente de refroidissement peut être utilisée dès lors qu'elle permet le refroidissement à coeur des fruits et légumes à la température souhaitée. Ainsi on pourrait éventuellement envisager de refroidir les fruits et légumes, lors de cette première étape, par simple réfrigération dans une chambre froide maintenue à une température de 0 à 15°C.

Le temps nécessaire au refroidissement dépend essentiellement de la température de refroidissement souhaitée, de la température de la composition aqueuse de refroidissement et de la technique utilisée pour le refroidissement à coeur.

Par hydrocooling, en utilisant une composition aqueuse de refroidissement de 0°C à 15°C, une durée de refroidissement de 2 minutes à 2 heures est généralement suffisante. Lorsque la température de la composition aqueuse de refroidissement est de 0 à 6°C, une durée de douchage, respectivement immersion de 2 minutes à 60 minutes, par exemple de 4 minutes à 30 minutes convient généralement.

Pour le traitement des pêches et des tomates, on peut prévoir de réaliser le refroidissement par immersion en douchage, pendant 15 minutes à 30 minutes à l'aide d'une composition aqueuse de 0 à 5°C, voire de 0 à 6°C.

La deuxième étape est l'étape de traitement proprement dite. Elle implique le traitement des fruits et légumes par une composition aqueuse (dite composition traitante) présentant une température comprise entre 40°C et 60°C, de préférence entre 45°C et 55°C, mieux encore entre 48 et 52°C, par exemple 50°C.

La composition aqueuse traitante peut être simplement constituée d'eau.

Cependant, selon un mode de réalisation particulièrement préféré de l'invention, la composition aqueuse comprend, dans un véhicule aqueux, au moins un agent traitant à activité antioxydante et/ou au moins un agent traitant à activité antifongique.

Le traitement consiste à mettre en contact la composition traitante avec les fruits et légumes par immersion ou douchage, et ceci pendant au plus 10 minutes, notamment pendant 30 secondes à 10 minutes, avantageusement de 30 secondes à 5 minutes. Un temps de contact de 2 à 3 minutes est le plus souvent suffisant. Il est clair que le temps de mise en contact doit être ajusté en fonction de la nature des fruits et légumes de façon à éviter un début de cuisson.

Lors de cette deuxième étape, les fruits et légumes sont chauffés en surface sur une faible épaisseur. Un temps de contact avec la composition traitante chaude inférieur à 10 minutes permet généralement d'élever la température d'au plus 20% du fruit, de préférence d'au plus 15%, mieux encore d'au plus 10%. Les techniques d'immersion et de douchage mises en oeuvre lors de cette étape sont telles que décrites ci-dessus.

Par application par douchage ou immersion de la composition traitante chaude, on obtient une protection des fruits et légumes contre l'échaudure de prématurité et les infections fongiques. Lorsque la composition aqueuse chaude de traitement contient en outre un ou plusieurs agents traitants, la protection des fruits et légumes est prolongée dans le temps du fait de l'absorption en surface des principes actifs, qu'ils soient antioxydants ou fongicides. Les fruits et légumes peuvent être ainsi protégés durablement contre l'oxydation et les infections fongiques.

Lorsque la composition traitante contient un agent antioxydant ou antifongique, celui-ci est présent dans la composition à raison de 100 à 10000 ppm, étant entendu que la composition de traitement contient préférablement de 500 à 10000 ppm de l'agent antioxydant et/ou de 100 à 10000 ppm de l'agent antifongique.

Les agents antioxydants utilisables selon l'invention sont ceux couramment mis en oeuvre dans la technique tels que la diphénylamine, l'éthoxiquine, le BHA (3-t-butyl-4-hydroxyanisole et 2-t-butyl-4-hydroxyanisole), le BHT (2,6-di-tert-butyl-p-crésol), l'acide ascorbique, les tocophérols, et les polyphénols. Par polyphénol on entend, selon l'invention, des composés comportant un ou plusieurs noyaux phényle substitués par au moins deux groupes hydroxyle.

Des exemples de tels polyphénols sont la quercétine et le rosmaridiphénol de formules:

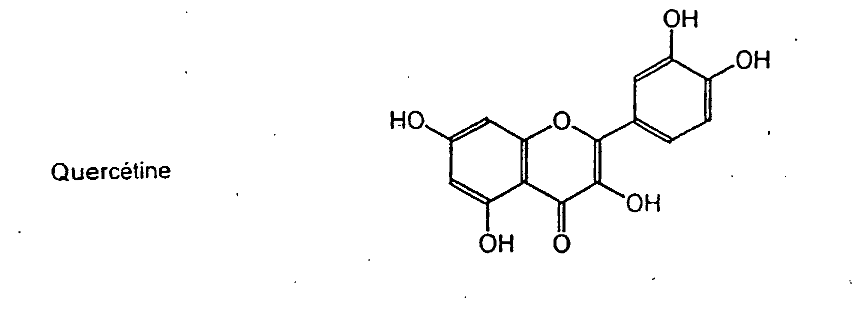

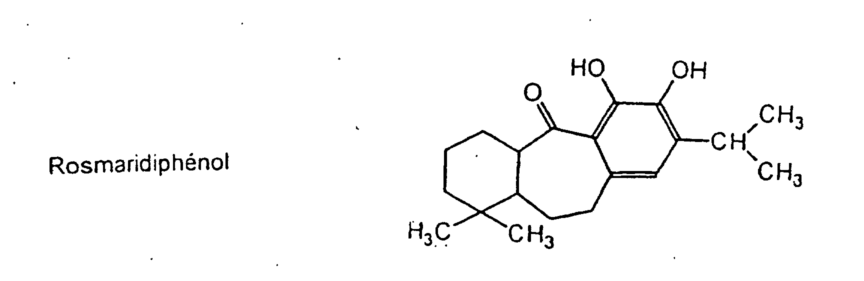

A titre d'antioxydants préférés, on peut citer la vitamine E (un tocophérol) et les polyphénols extraits de substances naturelles, comme par exemple les polyphénols extraits de végétaux ou de fruits.

Les polyphénols extraits de substances naturelles peuvent être utilisés après extraction sous la forme de mélanges complexes de plusieurs polyphénols avec diverses substances naturelles. Ces mélanges contiennent de préférence au moins 70%, mieux encore au moins 80% et plus préférablement au moins 90% de polyphénols. Toutefois, des mélanges moins concentrés peuvent également être utilisés. De tels extraits naturels, plus ou moins concentrés en polyphénols sont disponibles dans la technique. Parmi ceux-ci on peut citer les extraits d'épinards concentrés en polyphénols.

A titre de substance antifongique, on peut utiliser l'une quelconque des substances connues dans la technique telles que le thiabendazole, un composé terpénique, l'orthophénylphénol et ses sels et l'énilconazole.

Les terpènes antifongiques sont de préférence des monoterpènes, tels que le pinène ou le limonène. Les monoterpènes oxygénés sont préférables aux monoterpènes simplement hydrocarbonés en raison d'une activité supérieure. On peut citer comme exemples le terpinéol, l'eucalyptol, le menthol, la menthone, la carvone, le cinéole, le citronellal et l'eugénol. Parmi ces composés, l'eugénol s'est avéré être supérieurement efficace.

On notera que les produits cités ci-dessus sont d'origine naturelle, bien qu'également accessibles par voie synthétique. Par exemple, la d-carvone peut être extraite du cumin, la I-carvone peut être de la menthe commune (Mentha Spicata) et l'eugénol du girofle.

La composition traitante se présente avantageusement sous forme de solution ou de dispersion dans ledit véhicule aqueux.

Selon que le produit est plus ou moins soluble dans l'eau, la composition peut également comprendre en outre au moins un tensioactif choisi de façon connue en soi parmi les tensioactifs non-ioniques, anioniques, cationiques et amphotères.

Lorsque la composition traitante chaude contient un agent antioxydant et/ou un agent antifongique, l'application de la composition se fait de préférence de telle sorte que la quantité d'agent traitant appliquée corresponde aux doses habituelles d'utilisation d'agent traitant dans les traitements en question. Cette quantité peut être avantageusement de 0,4 à 40 g d'agent antioxydant et/ou de 0,4 à 40 g d'agent fongicide par tonne de fruits ou de légumes traités.

De préférence, la quantité d'agent antioxydant utilisée sera de 2 à 40 g/tonne et la quantité de composé terpénique sera de 0,4 à 20 g/tonne de fruits ou légumes traités.

Lorsque la durée de traitement par la composition chaude désirée est atteinte, il peut être mis fin à l'application par tous moyens connus, notamment par simple arrêt du douchage ou retrait des fruits ou légumes du bac d'immersion. Les fruits ou légumes sont alors aptes à être stockés en vue de leur distribution ultérieure.

Les étapes de refroidissement à coeur et de traitement antioxydant et/ou antifongique du procédé de l'invention sont réalisées en série, ce qui signifie qu'une fois la température de refroidissement souhaitée atteinte on procède au traitement des fruits et légumes par la composition traitante.

Le procédé de l'invention présente l'avantage d'éviter la maturation précoce des fruits et légumes traités à chaud par la composition traitante. Ce procédé est de ce fait plus particulièrement utile pour le traitement des fruits et légumes particulièrement sensibles à la chaleur, tels que les pêches, les abricots, les tomates, les poires et les nectarines.

. Le procédé de l'invention présente en outre l'avantage d'éviter le refroidissement ultérieur des fruits et légumes traités par la composition traitante chaude, lequel était préconisé dans l'art antérieur de façon à limiter l'évolution des fruits et légumes. Or ce refroidissement ultérieur est d'autant moins souhaitable que la composition traitante chaude contient un ou plusieurs agents traitants. Généralement réalisé par contact avec de l'eau froide (notamment par immersion ou aspersion), le refroidissement ultérieur a pour effet de laver les fruits et légumes traités, éliminant ainsi les résidus d'agents traitants qui se déposent sur la surface des fruits lors de l'étape de traitement par la composition traitante chaude: ce lavage a pour effet de diminuer l'efficacité du traitement antioxydant ou/et antifongique.

Dans le procédé de l'invention on utilise une installation de traitement de fruits et légumes après récolte en vue de prolonger leur durée de conservation, tout en les préservant d'une maturation accélérée, comprenant :
- des moyens pour refroidir à coeur les fruits et légumes par douchage avec une composition aqueuse de refroidissement ou immersion dans une composition aqueuse de refroidissement, ladite composition aqueuse de refroidissement présentant une température supérieure à 0°C et inférieure à 15°C ; et
- des moyens pour soumettre pendant au plus 10 minutes, lesdits fruits et légumes à un traitement par douchage avec une composition traitante ou par immersion dans une composition traitante, ladite composition traitante étant une composition aqueuse préalablement portée à une température de 40 à 60°C.

L'exemple donné ci-après illustre l'invention.

### EXEMPLE

### Première étape du traitement

Les fruits et légumes du tableau 2 ci-dessous sont tout d'abord soumis à un refroidissement à coeur par douchage à l'aide d'une composition aqueuse à 2°C constituée d'eau contenant 300 g/m³ d'eau d'une solution commerciale d'hypochlorite de sodium (teneur en chlore actif: 30-50 ppm).

La durée de refroidissement est précisée dans le tableau 2.

| Fruit/légume | Durée de douchage |
|---|---|
| tomate | 12 minutes |
| pêches | 12 minutes |

### Deuxième étape du traitement :

Puis, les tomates et les pêches sont soumises à un douchage pendant 2 minutes par une composition aqueuse traitante préalablement portée à 50°C constituée d'eau éventuellement additionnée de 4000 ppm d'eugénol.

A l'issue de ce traitement, les pêches et les tomates sont stockées en chambre froide à 0°C.

On constate que les pêches et les tomates ainsi traitées se conservent plus longtemps que les fruits issus de la même cueillette et présentant le même degré de maturation qui sont traités, dans les mêmes conditions, par la composition traitante chaude (2è étape du traitement), suivi d'un refroidissement ultérieur par douchage avec une composition aqueuse à 2°C.

## Revendications

1. Procédé de traitement de fruits et légumes après récolte en vue de prolonger leur durée de conservation, tout en les préservant d'une maturation accélérée, comprenant la mise en oeuvre successive des étapes consistant à :
- refroidir à coeur les fruits et légumes par douchage avec une composition aqueuse de refroidissement ou immersion dans une composition aqueuse de refroidissement, ladite composition aqueuse de refroidissement présentant une température supérieure à 0°C et inférieure à 15°C ; et
- soumettre, pendant au plus 10 minutes, lesdits fruits et légumes à un traitement par douchage avec une composition traitante ou par immersion dans une composition traitante, ladite composition traitante étant une composition aqueuse préalablement portée à une température de 40 à 60°C.

2. Procédé selon la revendication 1, **caractérisé en ce que** les fruits et légumes sont choisis parmi les pêches, les abricots, les tomates et les poires.

3. Procédé selon l'une quelconque des revendications précédentes, **caractérisé en ce que** le refroidissement à coeur des fruits et légumes est réalisé par douchage ou immersion pendant 2 minutes à 2 heures.

4. Procédé selon l'une quelconque des revendications précédentes, **caractérisé en ce que** le refroidissement à coeur est réalisé à l'aide d'une composition présentant une température supérieure à 0°C et inférieure à 6°C pendant 2 minutes à 1 heure.

5. Procédé selon l'une quelconque des revendications précédentes pour le traitement des pêches ou des tomates, **caractérisé en ce que** les pêches, respectivement les tomates, sont refroidies par douchage ou immersion pendant 15 à 30 minutes avec une composition aqueuse présentant une température de 0 à 5°C.

6. Procédé selon l'une quelconque des revendications précédentes, **caractérisé en ce que** la composition traitante est constituée d'un véhicule aqueux additionné d'au moins un agent traitant à activité antioxydante ou fongicide.

7. Procédé selon la revendication 6, **caractérisé en ce que** la composition traitante comprend de 500 à 10 000 ppm d'un agent antioxydant.

8. Procédé selon la revendication 6 ou la revendication 7, **caractérisé en ce que** la composition traitante comprend un agent antioxydant choisi parmi la diphénylamine, l'éthoxiquinine, le BHA (3-t-butyl-4-hydroxyanisole et 2-t-butyl-4-hydroxyanisole), le BHT (2,6-di-tert-butyl-p-crésol), l'acide ascorbique, les tocophérols et les polyphénols.

9. Procédé selon la revendication 8, **caractérisé en ce que** l'agent anti-oxydant est choisi parmi les polyphénols extraits de substances naturelles et la vitamine E.

10. Procédé selon la revendication 6, **caractérisé en ce que** la composition traitante comprend de 100 à 10 000 ppm d'un agent antifongique.

11. Procédé selon la revendication 6 ou la revendication 10, **caractérisé en ce que** la composition traitante comprend une substance antifongique choisie parmi le thiabendazole, un composé terpénique, l'orthophénylphénol et ses sels et l'énilconazole.

12. Procédé selon l'une quelconque des revendications 6 à 11, **caractérisé en ce que** la dose d'agent traitant utilisé est de 0,4 à 40 g/tonne de fruits et légumes.

## Claims

1. Fruit and vegetable treatment process after harvesting with a view to prolonging their preservation time, whilst protecting them against accelerated ripening, comprising the successive implementation of the steps comprising:
- cooling the fruit and vegetables to the core by spraying with an aqueous cooling composition or immersion in an aqueous cooling composition, said aqueous cooling composition having a temperature which is greater than 0°C and less than 15°C; and
- subjecting said fruit and vegetables, for more than 10 minutes, to a treatment by spraying with a treating composition or by immersion in a treating composition, said treating composition being an aqueous composition, previously brought to a temperature of 40°C to 60°C.

2. Method according to claim 1, **characterised in that** the fruit and vegetables are selected from peaches, apricots, tomatoes and pears.

3. Method according to any of the preceding claims, **characterised in that** the cooling of the fruit and vegetables to the core is produced by spraying or immersion for 2 minutes to 2 hours.

4. Method according to any of the preceding claims, **characterised in that** the cooling to the core is produced by means of a composition having a temperature which is greater than 0°C and less than 6°C for 2 minutes to 1 hour.

5. Method according to any of the preceding claims for the treatment of peaches or of tomatocs, **characterised in that** the peaches, the tomatoes respectively, are cooled by spraying or immersion for 15 to 30 minutes with an aqueous composition having a temperature of 0 to 5°C.

6. Method according to any of the preceding claims, **characterised in that** the treating composition comprises an aqueous vehicle supplemented by at least one treating agent with an antioxidant or fungicidal action.

7. Method according to claim 6, **characterised in that** the treating composition comprises 500 to 10,000 ppm of an antioxidant agent.

8. Method according to claim 6 or claim 7, **characterised in that** the treating composition comprises an antioxidant agent selected from diphenylamine, ethoxyquinine, BHA (3-t-butyl-4-hydroxyanisole and 2-t-butyl-4-hydroxyanisole), BHT (2,6-di-tert-butyl-p-cresol), ascorbic acid, tocopherols and polyphenols.

9. Method according to claim 8, **characterised in that** the antioxidant agent is selected from polyphenols extracted from natural substances and vitamin E.

10. Method according to claim 6, **characterised in that** the treating composition comprises 100 to 10,000 ppm of a fungicidal agent.

11. Method according to claim 6 or claim 10, **characterised in that** the treating composition comprises a fungicidal substance selected from thiabendazol, a terpene compound, orthophenylphenol and its salts and enilconazole.

12. Method according to any of the claims 6 to 11, **characterised in that** the dosage of the treating agent used is from 0.4 to 40 g/tonne of fruit and vegetables.

## Patentansprüche

1. Verfahren zur Behandlung von Obst und Gemüse nach der Ernte zum Verlängern seiner Haltbarkeitsdauer und unter seinem Schützen vor einer beschleunigten Reifung, das das aufeinanderfolgende Durchführen der Schritte umfaßt, bestehend aus:
- dem Kühlen des Obstes und Gemüses bis zum Kern durch Abbrausen mit einer wäßrigen Kühlzusammensetzung oder Tauchen in eine wäßrige Kühlzusammensetzung, wobei die wäßrige Kühlzusammensetzung eine Temperatur über 0°C und unter 15°C aufweist, und
- dem Unterziehen des Obstes und Gemüses mehr als 10 Minuten einer Brausebehandlung mit einer Behandlungszusammensetzung oder durch Tauchen in eine Behandlungszusammensetzung, wobei die Behandlungszusammensetzung eine wäßrige Zusammensetzung ist, die zuvor auf eine Temperatur von 40 bis 60°C gebracht wurde.

2. Verfahren gemäß Anspruch 1, **dadurch gekennzeichnet, daß** das Obst und das Gemüse aus Pfirsichen, Aprikosen, Tomaten und Birnen ausgewählt ist.

3. Verfahren gemäß einem der vorangehenden Ansprüche, **dadurch gekennzeichnet, daß** das Kühlen des Obstes und Gemüses bis zum Kern durch 2 Minuten bis 2 Stunden Abbrausen oder Tauchen ausgeführt wird.

4. Verfahren gemäß einem der vorangehenden Ansprüche, **dadurch gekennzeichnet, daß** das Kühlen bis zum Kern 2 Minuten bis 1 Stunde mit Hilfe einer Zusammensetzung durchgeführt wird, die eine Temperatur über 0°C und unter 6°C aufweist.

5. Verfahren gemäß einem der vorangehenden Ansprüche zur Behandlung von Pfirsichen oder von Tomaten, **dadurch gekennzeichnet, daß** die Pfirsiche beziehungsweise Tomaten durch 15 bis 30 Minuten Abbrausen oder Tauchen mit einer wäßrigen Zusammensetzung gekühlt werden, die eine Temperatur von 0 bis 5°C aufweist.

6. Verfahren gemäß einem der vorangehenden Ansprüche, **dadurch gekennzeichnet, daß** die Behandlungszusammensetzung aus einem wäßrigen Träger besteht, dem mindestens ein Behandlungsmittel mit antioxidativer oder fungizider Aktivität zugesetzt ist.

7. Verfahren gemäß Anspruch 6, **dadurch gekennzeichnet, daß** die Behandlungszusammensetzung 500 bis 10 000 ppm eines Antioxidationsmittels umfaßt.

8. Verfahren gemäß Anspruch 6 oder Anspruch 7, **dadurch gekennzeichnet, daß** die Behandlungszusammensetzung ein Antioxidationsmittel umfaßt, das aus Diphenylamin, Ethoxychinin, BHA (3-t-Butyl-4-hydroxyanisol und 2-t-Butyl-4-hydroxyanisol), BHT (2,6-Di-tert-butyl-p-kresol), Ascorbinsäure, Tocopherolen und Polyphenolen ausgewählt ist.

9. Verfahren gemäß Anspruch 8, **dadurch gekennzeichnet, daß** das Antioxidationsmittel aus Polyphenolen, die aus natürlichen Substanzen extrahiert wurden, und Vitamin E ausgewählt ist.

10. Verfahren gemäß Anspruch 6, **dadurch gekennzeichnet, daß** die Behandlungszusammensetzung von 100 bis 10 000 ppm eines Antipilzmittels umfaßt.

11. Verfahren gemäß Anspruch 6 oder Anspruch 10, **dadurch gekennzeichnet, daß** die Behandlungszusammensetzung ein Antipilzmittel umfaßt, das aus Thiabendazol, einer Terpenverbindung, o-Phenylphenol und seinen Salzen und Enilconazol ausgewählt ist.

12. Verfahren gemäß Anspruch 6 bis 11, **dadurch gekennzeichnet, daß** die verwendete Dosis des Behandlungsmittels 0,4 bis 40 g/Tonne Obst und Gemüse beträgt.
